# EUROPEAN PATENT APPLICATION

(11) **EP 4 525 414 A1**
(43) Date of publication of application: **19.03.2025**
(21) Application number: 23806772.2
(22) Date of filing: 09.05.2023
(51) Int. Cl.: H04L 69/06

(54) **INFORMATION TRANSMISSION METHODS AND APPARATUS, COMMUNICATION DEVICE, AND STORAGE MEDIUM**

(30) Priority: 16.05.2022 CN 202210530356
(71) Applicant: Vivo Mobile Communication Co., Ltd., Dongguan, Guangdong 523863 (CN)
(72) Inventor: YU, Hang, Dongguan, Guangdong 523863 (CN); ZHANG, Yizhong, Dongguan, Guangdong 523863 (CN); KANG, Yanchao, Dongguan, Guangdong 523863 (CN)
(74) Representative: Shieldmark
(86) International application number: PCT/CN2023/092996
(87) International publication number: WO 2023/221820

(57) **Abstract**

This application discloses an information transmission method and apparatus, a communication device, and a readable storage medium, which relate to the technical field of communications. An information transmission method of embodiments of this application includes: sending, by a first communication device, a first message to a second communication device, where the first message includes an information elements container, and the information elements container includes identification information of at least one first information element and content of the at least one first information element.

## Description

### CROSS-REFERENCE TO RELATED APPLICATIONS

This application claims the priority of Chinese Patent Application No. 202210530356.0 filed in China on May 16, 2022, the entire content of which is hereby incorporated by reference.

### TECHNICAL FIELD

This application relates to the technical field of communications, and in particular, to an information transmission method and apparatus, a communication device, and a readable storage medium.

### BACKGROUND

In the related technology, during transmission of an information element (Information Element, IE), there are a plurality of types (type) of IE formats, such as type 1, type 2, ..., type 6. Information element identifiers (Information Element Identifier, IEI) in the type 6 format are grouped into "comprehension required" and non-"comprehension required" for a receiver to distinguish different IEs and perform different processing after receiving the IE. However, the IEIs of the non-"comprehension required" of the type 6 of the related technology have been used up. In a case that a new IE needs to be introduced, there are no IEIs available for encoding and decoding. Therefore, the lack of IEI resources in the related technology is an urgent problem to be solved.

### SUMMARY

Embodiments of this application provide an information transmission method and apparatus, a communication device, and a readable storage medium, which can solve the problem of insufficient IEI resources in the related technology.

According to a first aspect, an information transmission method is provided, including:
sending, by a first communication device, a first message to a second communication device, where
the first message includes an information elements container, and the information elements container includes identification information of at least one first information element and content of the at least one first information element.

According to a second aspect, an information transmission method is provided, including:
receiving, by a second communication device, the first message from the first communication device, where
the first message includes an information elements container, and the information elements container includes identification information of at least one first information element and content of the at least one first information element.

According to a third aspect, an information transmission apparatus is provided, which is applied to a first communication device and includes:
a first sending module, configured to send a first message to a second communication device, where
the first message includes an information elements container, and the information elements container includes identification information of at least one first information element and content of the at least one first information element.

According to a fourth aspect, an information transmission apparatus is provided, which is applied to a second communication device and includes:
a second receiving module, configured to receive a first message from a first communication device, where
the first message includes an information elements container, and the information elements container includes identification information of at least one first information element and content of the at least one first information element.

According to a fifth aspect, a communication device is provided, including a processor and a memory, where the memory stores a program or an indication that can run on the processor, and when the program or the indication is executed by the processor, the steps of the method according to the first aspect are implemented, or the steps of the method according to the second aspect are implemented.

According to a sixth aspect, a communication device is provided, including a processor and a communication interface, where in a case that the communication device is a first communication device, the communication interface is configured to send a first message to a second communication device; or in a case that the communication device is a second communication device, the communication interface is configured to receive a first message from a first communication device, where the first message includes an information elements container, and the information elements container includes identification information and content of at least one first information element.

According to a seventh aspect, a communication system is provided, including: a terminal and a network side device, where the terminal is capable of being configured to perform the steps of the information transmission method according to the first aspect, and the network side device is capable of being configured to perform the steps of the information transmission method according to the second aspect; or, the terminal is capable of being configured to perform the steps of the information transmission method according to the second aspect, and the network side device is capable of being configured to perform the steps of the information transmission method according to the first aspect.

According to an eighth aspect, a readable storage medium is provided, where the readable storage medium stores a program or indication, and the program or indication, when executed by a processor, implements the steps of the method according to the first aspect, or implements the steps of the method according to the second aspect.

According to a ninth aspect, a chip is provided, where the chip includes a processor and a communication interface, the communication interface is coupled to the processor, and the processor is configured to run a program or an indication to implement the steps of the method according to the first aspect, or implement the steps of the method according to the second aspect.

According to a tenth aspect, a computer program/program product is provided, where the computer program/program product is stored in a storage medium, and the computer program/program product is executed by at least one processor to implement the steps of the method according to the first aspect, or implement the steps of the method according to the second aspect.

In the embodiments of this application, the first communication device may send a first message to the second communication device, where the first message includes an information elements container and the information elements container includes identification information and content of at least one first information element. Therefore, by introducing the information elements container and encapsulating the identification information of the information element in the information elements container, different information elements can be distinguished without using an information element identifier IEI, thereby achieving an effect similar to that of the information element identifier IEI and solving the problem of insufficient IEI resources in the related technology.

### BRIEF DESCRIPTION OF THE DRAWINGS

FIG. 1 is a block diagram of an applicable wireless communication system according to an embodiment of this application;
FIG. 2 is a flowchart of an information transmission method according to an embodiment of this application;
FIG. 3A, FIG. 3B, and FIG. 3C are one of schematic diagrams of a type 6 information elements container (type 6 IEs container) according to an embodiment of this application;
FIG. 4A, FIG. 4B, FIG. 4C, and FIG. 4D are schematic diagrams of a type 6 IEs container according to an embodiment of this application;
FIG. 5 is a schematic diagram 1 of an information transmission process according to an embodiment of this application;
FIG. 6 is a schematic diagram 2 of an information transmission process according to an embodiment of this application;
FIG. 7 is a flowchart of another information transmission method according to an embodiment of this application;
FIG. 8 is a schematic structural diagram of an information transmission apparatus according to an embodiment of this application;
FIG. 9 is a schematic structural diagram of another information transmission apparatus according to an embodiment of this application;
FIG. 10 is a schematic structural diagram of a communication device according to an embodiment of this application;
FIG. 11 is a schematic structural diagram of a terminal according to an embodiment of this application; and
FIG. 12 is a schematic structural diagram of a network side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

The specification and claims of this application, and terms "first" and "second" are used to distinguish similar objects, but are unnecessarily used to describe a specific sequence or order. It is to be understood that the terms used in this case is exchangeable in a proper case, so that the embodiments of this application described herein can be implemented in an order different from the order shown or described herein, and in addition, the objects distinguished by "first" and "second" are generally one type, and the number of the objects is not limited, for example, there may be one first object, or a plurality of first objects. In addition, "and/or" in this specification and the claims indicates at least one of the connected objects, and the character "/" in this specification generally indicates an "or" relationship between the associated objects.

It is worth pointing out that the technologies described in the embodiments of this application are not limited to a long term evolution (Long Term Evolution, LTE)/LTE-advanced (LTE-Advanced, LTE-A) system, and may further be applied to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in the embodiments of this application are often used interchangeably. The technology described in this application can be applied to the systems and radio technologies mentioned above, and can also be applied to other systems and radio technologies. The following description describes a new radio (New Radio, NR) system for exemplary purposes, and uses the NR terminology in most of the following description, but these technologies are also applicable to applications other than NR system applications, such as a 6^{th} generation (6^{th} Generation, 6G) communication system.

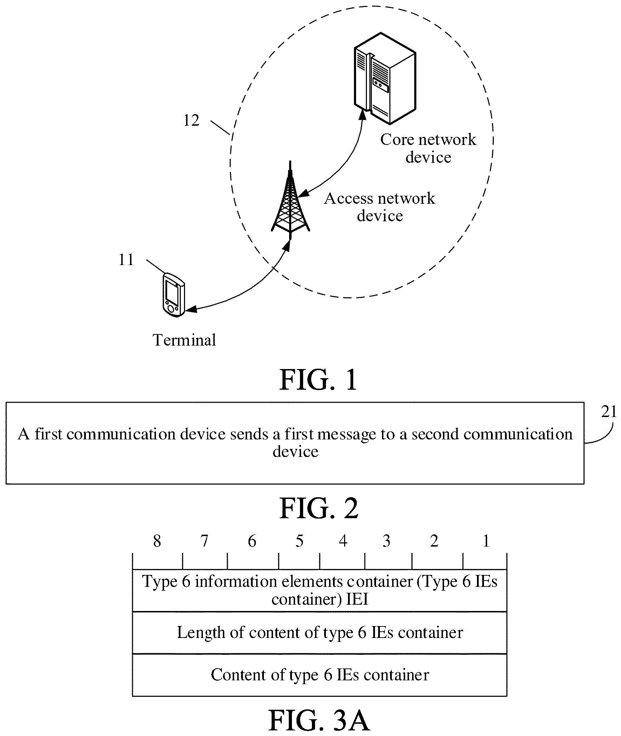

FIG. 1 is a block diagram of an applicable wireless communication system according to an embodiment of this application. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality(virtual reality, VR) device, a robot, a wearable device (Wearable Device), vehicle user equipment (Vehicle User Equipment, VUE), pedestrian user equipment (Pedestrian User Equipment, PUE), intelligent homes (home devices having a wireless communication function, such as a refrigerator, a TV set, a washing machine, or furniture), a game console, a personal computer (personal computer, PC), an automatic teller machine, or a self feeder. The wearable device includes: a smartwatch, a smart bracelet, a smart headphone, smart glasses, smart jewelry (such as a smart bracelet, a smart bracelet chain, a smart ring, a smart necklace, a smart anklet, or a smart bracelet chain), a smart wristband, smart clothing, or the like. It should be noted that, the specific type of the terminal 11 is not limited in the embodiments of this application. The network side device 12 may include an access network device or a core network device. The access network device may alternatively be referred to as a radio access network device, a radio access network (Radio Access Network, RAN), a radio access network function, or a radio access network unit. The access network device may include a base station, a wireless local area network (Wireless local area Network, WLAN) access point (Access Point, AP) or wireless fidelity (Wireless Fidelity, WiFi) node, or the like. The base station may be referred to as a node B (Node B, NB), an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmitting receiving point (Transmitting Receiving Point, TRP), or some other appropriate term in the field, as long as the same technical effect can be achieved, and the base station is not limited to a specific technical term. It should be noted that, only an NR system is used as an example in the embodiments of this application, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (User Plane Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), or the like. It should be noted that, only a core network device in an NR system is used as an example in the embodiments of this application, but a specific type of the core network device is not limited.

In the embodiments of this application, the type 6 format IEs are grouped into LV-Es and TLV-Es. LV represents the length field (Length) + content field (Value), and TLV represents a type tag (Type Tag) + length field (Length) + content field (Value). A TLV-E type 6 IE includes: a 1-byte IEI, used for identifying the IE; a 2-byte length indicator (Length Indicator, LI), used for representing a length of a content (value) part; and a content part (value part), used for filling content of the IE. in a case that the IEI is encoded as "0111 1100" to "0111 1111" (7C-7F), a corresponding IE means "need comprehension"; in a case that the IEI is encoded as "0111 0000" to "0111 1011" (70-7B), a corresponding IE means non-"comprehension required".

"Comprehension required" means: a terminal or a network side device needs to process and/or respond to a received IE. Non-"comprehension required" means: a terminal or a network side device may directly ignore a received IE in a case of not recognizing it. For example, in a case of not recognizing a received IE, a length of bytes to be skipped may be determined according to a type indicated in the IEI during decoding. For example, for an IE in the type 6 format, 1+2+length needs to be skipped, where 1 represents one byte of an IEI, 2 represents two bytes of an LI, and length represents a length of a value indicated in the LI.

The information transmission method and apparatus, the communication device, and the readable storage medium provided by this embodiment of this application are described in detail below by using some embodiments and application scenarios thereof with reference to the accompanying drawings.

Referring to FIG. 2, FIG. 2 is a flowchart of an information transmission method according to an embodiment of this application. The method is applied to a first communication device. The first communication device is optionally a terminal or a network side device. The network side device is, for example, a core network element. As shown in FIG. 2, the method includes the following steps:
Step 21: A first communication device sends a first message to a second communication device.

In this embodiment, the first message includes an information elements container. The information elements container includes identification information of at least one first information element and content of the at least one first information element. The identification information may identify a type of the corresponding first information element. Identification information of different first information elements is also different. The identification information of the first information element is different from an IEI of a related technology information element IE. For example, in some cases, the identification information may be selected as feature information of the first information element. For example, the first information element may optionally be a slice simultaneous registration group (Network slice Simultaneous Registration group, NSSRG) and/or a slice access layer group (Network slice AS group, NSAG), and in this case, both identification information and content of the NSSRG and/or the NSAG may be placed in a container.

Optionally, the first information element may be a type 6 IE, which may include a defined type 6 IE and/or a newly defined type 6 IE. In addition, the first information element may alternatively be another type of IE, which is not limited.

In some embodiments, in a case that the first information element is a type 6 IE, a corresponding information elements container is a type 6 information elements container (type 6 IEs container).

In some embodiments, the first communication device is a network side device, and correspondingly, the second communication device is a terminal. In this case, the first message may be selected as, but is not limited to, a registration accept (registration accept) message or the like.

In some other embodiments, the first communication device is a terminal, and correspondingly, the second communication device is a network side device. In this case, the first message may be selected as, but is not limited to, a 5G mobility management (5GS Mobility Management, 5GMM) message, a 5G session management (5GS Session Management, 5GSM) message, and the like.

In the information transmission method in this embodiment of this application, the first communication device may send a first message to the second communication device, where the first message includes an information elements container and the information elements container includes identification information and content of at least one first information element. Therefore, by introducing the information elements container and encapsulating the identification information of the information element in the information elements container, different information elements can be distinguished without using an information element identifier IEI, thereby achieving an effect similar to that of the information element identifier IEI and solving the problem of insufficient IEI resources in the related technology.

Optionally, the first message may further include: information element identifier and content of at least one second information element, so as to meet a requirement of transmitting an information element independently without depending on an information elements container. For example, the second information element may be a type 6 information element (type 6 IE), which may include a defined type 6 IE and/or a newly defined type 6 IE. The second information element may alternatively be another type of IE, which is not limited.

It should be noted that the first information element is an information element encapsulated in an information elements container, and the second information element is an information element outside the information elements container. The first information element and the second information element may be different type 6 IEs. For example, the first information element is a newly defined type 6 IE, and the second information element is a defined type 6 IE; or, the first information element and the second information element are different newly defined type 6 IEs; or, the first information element and the second information element are different defined type 6 IEs.

In this embodiment of this application, the first communication device needs to meet a particular condition to send a first message, and the sending a first message to a second communication device may include:
sending, by the first communication device, the first message to the second communication device in a case that a first condition is met, where the first condition includes at least one of the following:
the first communication device determines that at least one information element needs to be provided for the second communication device;
the first communication device supports encoding and decoding of the information elements container;
the second communication device supports encoding and decoding of the information elements container; or
the identification information of the at least one first information element is encapsulated in the information elements container.

In some embodiments, the network side device sends the first message to the terminal upon determining that at least one information element needs to be provided for the terminal, for example, determining that at least one information element needs to be carried in a response to a request initiated by the terminal.

In some other embodiments, the network side device sends the first message to the terminal upon determining that at least one information element needs to be provided for the terminal and both the network side device and the terminal support encoding and decoding of the information elements container.

In some other embodiments, the network side device sends the first message to the terminal upon determining that at least one information element needs to be provided for the terminal, both the network side device and the terminal support encoding and decoding of the information elements container, and identification information of the at least one first information element is encapsulated in the information elements container.

In some other embodiments, the terminal sends the first message to the network side device upon determining that at least one information element needs to be provided for the network side device and both the terminal and the network side device support encoding and decoding of the information elements container.

In some other embodiments, the terminal sends the first message to the network side device upon determining that at least one information element needs to be provided for the network side device, both the terminal and the network side device support encoding and decoding of the information elements container, and identification information of the at least one first information element is encapsulated in the information elements container.

Optionally, in a case that at least one information element needs to be provided, the first communication device sends a second message to the second communication device in a case that the first communication device does not support encoding and decoding of the information elements container and/or the second communication device does not support encoding and decoding of the information elements container. The second message includes an information element identifier IEI of the at least one first information element and content of the at least one first information element, and the second message does not include the information elements container. In this way, the related information can be ensured to be successfully sent to the second communication device, and in addition the related information element is ensured to be successfully encoded and decoded.

Optionally, the first communication device may receive capability information from the second communication device. The capability information is used for indicating whether the second communication device supports encoding and decoding of the information elements container, so that the first communication device learns a capability of the second communication device on the information elements container.

Optionally, after the first message is sent, the first communication device may receive a first reason value from the second communication device. The first reason value is used for indicating a reason why the second communication device cannot identify the first message. For example, the reason may be that the second communication device does not support encoding and decoding of the information elements container.

In some embodiments, the first reason value may be sent by the second communication device to the first communication device during feeding back of a message of the first communication device. For example, the network side device may send the first reason value to the terminal during feeding back of a message of a terminal, so as to inform the terminal that the reason why the first message cannot be identified is that encoding and decoding of the information elements container is not supported.

Optionally, in a case that the reason why the second communication device cannot identify the first message is: the second communication device does not support encoding and decoding of the information elements container, the first communication device may send the IEI and the content of the at least one first information element to the second communication device by using a third message. For example, for a type 6 IE, in the case of knowing that the reason why the terminal cannot identify the first message is that the terminal does not support encoding and decoding of the information elements container, the network side device may send, by using some messages such as messages of terminal configuration update (such as UE configuration update, UCU), downlink non-access layer transmission (such as DL NAS TRANSPORT), or the like, a type 6 IE contained in the information elements container and not recognized by the terminal to the terminal.

Optionally, to ensure successful reception of the first message, a timer for replying and confirming the first message may be introduced. During transmission of the first message, the first communication device may start a first timer (time), and the first timer is a timer for the second communication device to reply and confirm the first message; then, in a case that no fourth messages of the second communication device and used for replying and confirming the first message are received after the first timer expires, the first communication device resends the first message to the second communication device, to ensure that the second communication device obtains related information; or, in a case that a fourth message of the second communication device and used for replying and confirming the first message is received before the first timer expires, the first communication device stops the first timer. For example, the fourth message is a registration completion (such as a Registration complete) message.

Optionally, the information elements container may include at least one of the following: an information element identifier of the information elements container and a length indicator of the information elements container. In this way, different information elements containers can be distinguished by using information element identifiers of the information elements containers and lengths of content of the information elements containers can be learned by using lengths of the information elements containers.

In some embodiments, in a case that the information elements container is a type 6 IEs container, the information element identifier of the type 6 IEs container may be "comprehension required (comprehension required)" or non-"comprehension required".

In some embodiments, in a case that the information elements container is a type 6 IEs container, the information element identifier of the type 6 IEs container may use an IEI of the "comprehension required" of an existing type 6 IE, for example, any one of IEI 7C to 7F, so as to meet a transmission requirement without breaking the relevant technical protocol architecture.

In some other embodiments, in a case that the information elements container is a type 6 IEs container, the information element identifier of the type 6 IEs container may be set to an available IEI of non-"comprehension requirement", for example, the IEI is any one of 70, 71, or 7B, and then IEs of the remaining two IEI identifiers and a newly defined type 6 IE are all encapsulated in the type 6 IEs container, or not encapsulated in the type 6 IEs container and still sent in the registration accept message.

Optionally, the information elements container may further include: a length (length) and content (Value) of the at least one first information element.

Optionally, the information elements container may have different implementations, which are illustrated in the following.

### Method 1:

In this method 1, the information elements container includes: content of the information elements container. The content of the information elements container includes: a number of first information elements in the information elements container, and information of each first information element in the information elements container. The information of each first information element includes: identification information of each first information element, a length of each first information element, and content of each first information element.

For example, the information elements container is a type 6 IEs container, referring to FIG. 3A, the type 6 IEs container may include: a type 6 IEs container IEI, a length of content of the type 6 IEs container (for example, length of type 6 IEs container contents), and content of the type 6 IEs container (for example, type 6 IEs container contents).

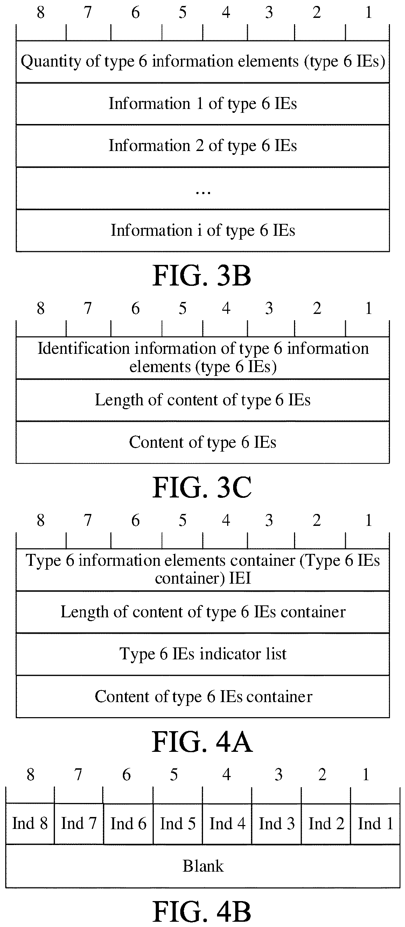

Further, as shown in FIG. 3B, the type 6 IEs container contents may include: a number of type 6 IEs included in the type 6 IEs container (Number of type 6 IEs, that is, the following i), and information of each type 6 IE in the type 6 IEs container, such as a type 6 IEs container entry 1, a type 6 IEs container entry 2, ..., and a type 6 IEs container entry i, where i is a positive integer, the number of type 6 IEs in FIG. 3B is, for example, i, which is not limited thereto.

Further, as shown in FIG. 3C, information of each type 6 IE in the type 6 IEs container may include: identification information of the type 6 IEs (for example, type of type 6 IEs), a length of content of the type 6 IEs (for example, Length of type 6 IEs container entry), and content of the type 6 IEs (for example, Value of type 6 IEs container entry). The identification information of the type 6 IE is used for indicating a type 6 IE carried in the corresponding container.

In some embodiments, the type of type 6 IEs may include 8 bits of information. For example, 00000000 is standby, and 00000001 indicates that the container carries NSAG information (information).

### Method 2:

In this method 2, the information elements container includes: an information element indicator list and content of the information elements container. An information element indicator in the information element indicator list is used for indicating whether the information elements container includes a first information element corresponding to the information element indicator. The content of the information elements container includes: information of each first information element in the information elements container. The information of each first information element includes: identification information of each first information element, a length of each first information element, and content of each first information element.

For example, the information elements container is a type 6 IEs container, referring to FIG. 4A, the type 6 IEs container may include: a type 6 IEs container IEI, a length of content of the type 6 IEs container (Length of type 6 IEs container contents), an information element indicator list (type 6 IEs container IEs list), and content of the type 6 IEs container (type 6 IEs container contents).

Further, as shown in FIG. 4B, the type 6 IEs container IEs list may include IE indicators Ind 8, Ind 7, ..., and Ind 1, which is not limited thereto. The IE indicator is used for indicating whether the type 6 IE corresponding to the IE indicator is included in the type 6 IEs container. For example, a value of the IE indicator may be 0 or 1. 0 indicates that the type 6 IEs container does not include the corresponding type 6 IE, and 1 indicates that the type 6 IEs container includes the corresponding type 6 IE. For example, in a case that a value of the Ind 8 is 1, the type 6 IEs container includes a type 6 IE corresponding to the Ind 8; in a case that a value of the Ind 7 is 0, the type 6 IEs container does not include a type 6 IE corresponding to the Ind 7; in a case that a value of the Ind 1 is 1, the type 6 IEs container includes a type 6 IE corresponding to the Ind 1; and so on.

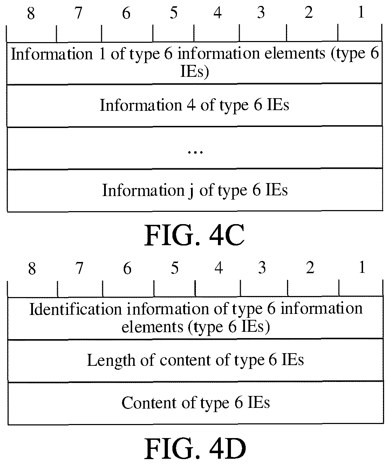

Further, FIG. 4C illustrates a type 6 IE included in the type 6 IEs container. For example, the type 6 IEs container includes type 6 IE information 1 (such as an Ind 1 container entry, that is, a type 6 IE corresponding to the Ind 1), type 6 IE information 4 (such as an Ind 4 container entry, that is, a type 6 IE corresponding to the Ind 4), ..., and type 6 IE information j (such as an Ind j container entry, that is, a type 6 IE corresponding to the Ind j), where j is a positive integer, j in FIG. 4C does not represent a number of type 6 IEs in the container, but represent that the container includes a type 6 IE j. For example, the Ind 1 may be used for indicating whether the type 6 IEs container carries NSAG information. For example, a value of the Ind 1 being 0 represents that the NSAG information is not carried; and a value of the Ind 1 being 1 represents that the NSAG information is carried.

Further, as shown in FIG. 4D, information of each type 6 IE in the type 6 IEs container may include: identification information of the type 6 IEs (for example, type of type 6 IEs), a length of content of the type 6 IEs (for example, Length of type 6 IEs container entry), and content of the type 6 IEs (for example, Value of type 6 IEs container entry). The identification information of the type 6 IE is used for indicating a type 6 IE carried in the corresponding container.

This application is described below with reference to the accompanying drawings and specific examples.

### Example 1:

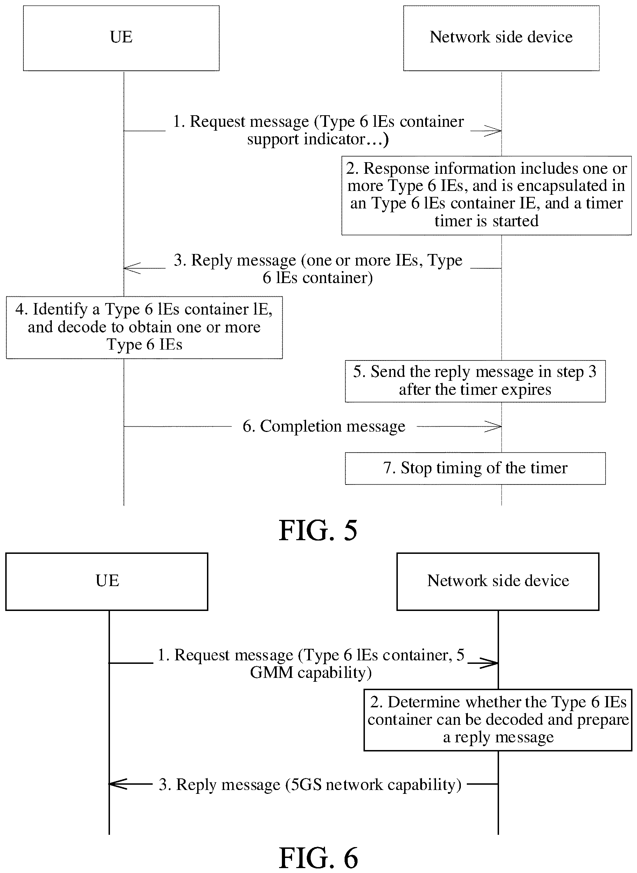

In this Example 1, the IEI of the type 6 IEs container is set to "comprehension requirement", such as any one of 7C to 7F of the IEIs of type 6 IEs. As shown in FIG. 5, an information transmission process includes:
S1: A terminal UE sends a request message to a network side device, where a 5GMM capability IE of the request message carries capability information, and the capability information is used for indicating whether the terminal supports encoding and decoding the type 6 IEs container; and in a case that the terminal supports the encoding and decoding of the type 6 IEs container, the terminal can recognize the Type 6 IEs container and successfully encode and decode the Type 6 IEs container; or in a case that the encoding and decoding of the type 6 IEs container is not supported, the terminal cannot recognize the type 6 IEs container sent by the network side device and cannot complete the encoding and decoding of the container.
S2: After receiving the capability information, the network side device performs any one of the following operations based on a capability of the terminal and a capability of the network side device.

S21: In a case that the network side device supports the encoding and decoding of the type 6 IEs container, it is determined that one or more Type 6 IEs need to be replied to the terminal in a response message, and the terminal supports the encoding and decoding of the type 6 IEs container, the network side device encapsulates one or more Type 6 IEs in the type 6 IEs container, and indicates, in the type 6 IEs container, the identification information of the Type 6 IE carried by the container, and the network side device performs one or more of the following operations:
1) sending a response message, where the response message includes a type 6 IEs container, and in addition, the response message may further contain at least one of the following: one or more defined Type 6 IEs: one or more newly defined Type 6 IEs; and other IEs;
2) starting a first timer, where the first timer is a timer for a terminal side to reply to an acknowledgement message, and after the timer expires, the network side considers that the terminal has not received the response message, and sends the response message again.

S22: In a case that the network side device determines that one or more Type 6 IEs need to be replied to the terminal in the response message, but the terminal does not support the encoding and decoding of the type 6 IEs container, the network side device does not carry the type 6 IEs container in the response message sent to the terminal, where the response message may contain at least one of the following: one or more defined Type 6 IEs: one or more newly defined Type 6 IEs; and other IEs.

S23: In a case that the network side device does not support the encoding and decoding the type 6 IEs container, the network side device does not carry the type 6 IEs container in the response message sent to the terminal.

S3: The network side device sends, to the terminal, a response message, including, for example, a type 6 IEs container.

S4: The terminal performs the following operations upon reception of the response message:
- in a case that the terminal supports encoding and decoding of the type 6 IEs container: decoding the type 6 IEs container, to obtain one or more Type 6 IEs, and replying to a completion message (that is, the fourth message) to the network side device, for the network side to confirm that the container is sent to the terminal and successfully decoded, and stopping the first timer; or
- in a case that the terminal does not support encoding and decoding of the type 6 IEs container: ignoring a related field during decoding, where the ignoring a related field includes: ignoring 1+2+length bytes, where 1 byte refers to an IEI length of the Type 6 IEs container; 2 bytes refers to an LI length of the Type 6 IE, and length refers to a length of a subsequent value displayed in the LI field.

S5: Optionally, the network side device repeatedly sends response message in S3 in a case that no completion messages replied by the terminal are received thereby after the first timer expires, where after a number of times of repeated sending reaches a preset maximum number of times, the network side device stops sending the response message and terminates the first timer.

S6: Optionally, the terminal sends a completion message (that is, the fourth message) to the network side device.

S7: Optionally, the network side device stops timing of the first timer in a case that the completion message is received before the first timer expires.

### Example 2:

In this Example 2, the IEI of the newly added type 6 IEs container is set to an available non-"comprehension requirement", such as any one of 70, 71, 7B of the IEIs of the type 6 IEs. Compared with Example 1, the main differences are: modifying the IEIs of the related technology Type 6 IEs, namely 70, 71, 7B, one of which is used in the Type 6 IEs container, and then the remaining two can be put into the container, or they can continue to be kept in the response message and use allocated IEIs. As shown in FIG. 5, an information transmission process includes:

### S1: The same as S1 in Example 1.

S2 to S4: In a case that the network side device supports the encoding and decoding of the type 6 IEs container and the terminal supports the encoding and decoding of the type 6 IEs container, the network side device encapsulates the Type 6 IE such as a service (Service)-level (level)-AA container, NSSRG information, extended (Extended) closed access group (Closed Access Group, CAG) information list (information list), and/or newly defined type 6 IE into the type 6 IEs container, and indicates, in the type 6 IEs container, a type of the Type 6 IE carried by the container, where the type 6 IEs container is sent to the terminal in the response message.

In particular, in a case that the following conditions are simultaneously met: 1) the network side device supports the encoding and decoding of the type 6 IEs container; 2) at least one of the three IEs, namely, the Service-level-AA container, the NSSRG information, and the Extended CAG information list is encapsulated in the type 6 IEs container; and 3) the network side device determines that the at least one of the three IEs, namely, the Service-level-AA container, the NSSRG information, and the Extended CAG information list need to be replied to the terminal; and optionally, the network side device performs the following operations:
1) sending a response message, where the response message includes a type 6 IEs container, and in addition, the response message may further contain at least one of the following: one or more Type 6 IEs to be replied to the terminal; and other IEs;
2) starting a first timer, where the first timer is a timer for a terminal side to reply to an acknowledgement message, and after the timer expires, the network side considers that the terminal has not received the response message, and sends the response message again; and
   in a case that the terminal supports the encoding and decoding the type 6 IEs container, but the network side device does not support the encoding and decoding the type 6 IEs container, the network side device does not carry the type 6 IEs container in the response message.

S5 to S7: The same as S5- S7 in Example 1.

### Example 3:

In this Example 3, a terminal sends a type 6 IEs container to the network side device. As shown in FIG. 6, an information transmission process includes:
S1: In a case that the terminal supports the encoding and decoding of the type 6 IEs container, the request message (that is, the first message) carries the type 6 IEs container and sends the same to the network side device, and in addition, the request message carries the capability information (such as, a 5GMM capability) to inform the network side device that the terminal supports the encoding and decoding of the type 6 IEs container.
S2: In a case that the network side device supports the encoding and decoding of the type 6 IEs container, determine to decode the type 6 IEs container.
S3: The network side device replies a response message (that is, the fourth message) to the terminal, where the response message is at least one of the following:
   1) capability information, such as 5G System (5G System, 5GS) network capability (network capability), used for indicating a capability supported by the network side device, including indicating whether the network side device supports the encoding and decoding of the Type 6 IEs container; or
   2) a first reason value, used for indicating the reason why the type 6 IEs container cannot be identified, where the reason may be, for example, the network side device does not support the encoding and decoding the type 6 IEs container.

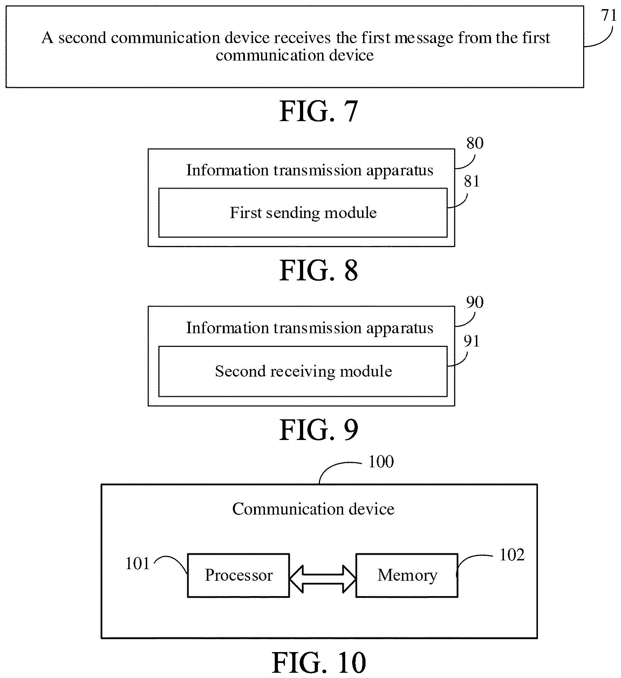

Referring to FIG. 7, FIG. 7 is a flowchart of an information transmission method according to an embodiment of this application. The method is applied to a second communication device. The first communication device is optionally a terminal or a network side device. The network side device is, for example, a core network element. As shown in FIG. 7, the method includes the following steps:
Step 71: A second communication device receives a first message from a first communication device.

In this embodiment, the first message includes an information elements container. The information elements container includes identification information of at least one first information element and content of the at least one first information element. The identification information may identify a corresponding first information element. Identification information of different first information elements is also different.

Optionally, the first information element may be a type 6 IE, which may include a defined type 6 IE and/or a newly defined type 6 IE. In addition, the first information element may alternatively be another type of IE, which is not limited.

In some embodiments, in a case that the first information element is a type 6 IE, the corresponding information elements container is a type 6 IEs container.

In some embodiments, the first communication device is a network side device, and correspondingly, the second communication device is a terminal. In this case, the first message may be selected as, but is not limited to, a registration accept (registration accept) message or the like.

In some other embodiments, the first communication device is a terminal, and correspondingly, the second communication device is a network side device. In this case, the first message may optionally be, but is not limited to, a 5GMM message, a 5GSM message, or the like.

In the information transmission method in this embodiment of this application, the second communication device may receive a first message from the first communication device, where the first message includes an information elements container and the information elements container includes identification information and content of at least one first information element. Therefore, by introducing the information elements container and encapsulating the identification information of the information element in the information elements container, different information elements can be distinguished without using an information element identifier IEI, thereby achieving an effect similar to that of the information element identifier IEI and solving the problem of insufficient IEI resources in the related technology.

Optionally, the first message may further include: information element identifier of at least one second information element, so as to meet a requirement of transmitting an information element independently without depending on an information elements container. For example, the second information element may be a type 6 IE, which may include a defined type 6 IE and/or a newly defined type 6 IE. The second information element may alternatively be another type of IE, which is not limited.

Optionally, the receiving a first message from a first communication device may include:
receiving, by the second communication device, the first message from the first communication device in a case that a first condition is met, where the first condition includes at least one of the following:
the first communication device determines that at least one information element needs to be provided for the second communication device;
the first communication device supports encoding and decoding of the information elements container;
the second communication device supports encoding and decoding of the information elements container; or
the identification information of the at least one first information element is encapsulated in the information elements container.

Optionally, after receiving the first message from the first communication device, the method further includes any one of the following:
decoding, by the second communication device, the information elements container; or
ignoring, by the second communication device, a related field of the information elements container during decoding of the first message.

Optionally, after the decoding the information elements container, the second communication device may send a fourth message to the first communication device, where the fourth message is used for replying and confirming the first message.

Optionally, after the related field of the information elements container is ignored, the second communication device may send first indication information to the first communication device, where the first indication information is used for indicating that the second communication device does not support the encoding and decoding of the information elements container, or for indicating that the decoding of the information elements container fails.

Optionally, in a case that the first communication device does not support the encoding and decoding of the information elements container, and/or the second communication device does not support the encoding and decoding of the information elements container, the second communication device may receive a second message from the first communication device; the second message includes an information element identifier of the at least one first information element and content of the at least one first information element, and the second message does not include the information elements container.

Optionally, the method further includes at least one of the following:
sending, by the second communication device, capability information to the first communication device, where the capability information is used for indicating whether the second communication device supports the encoding and decoding of the information elements container; or
sending, by the second communication device, a first reason value to the first communication device, where the first reason value is used for indicating a reason why the second communication device cannot identify the first message.

Optionally, the information elements container includes: content of the information elements container. The content of the information elements container includes: a number of first information elements in the information elements container, and information of each first information element in the information elements container. The information of each first information element includes: identification information of each first information element, a length of each first information element, and content of each first information element.

Optionally, the information elements container includes: an information element indicator list and content of the information elements container. An information element indicator in the information element indicator list is used for indicating whether the information elements container includes a first information element corresponding to the information element indicator. The content of the information elements container includes: information of each first information element in the information elements container. The information of each first information element includes: identification information of each first information element, a length of each first information element, and content of each first information element.

Optionally, the information elements container may include at least one of the following: an information element identifier of the information elements container and a length indicator of the information elements container. In this way, different information elements containers can be distinguished by using information element identifiers of the information elements containers and lengths of content of the information elements containers can be learned by using lengths of the information elements containers.

In some embodiments, in a case that the information elements container is a type 6 IEs container, the information element identifier of the type 6 IEs container may be "comprehension required" or non-"comprehension required".

In some embodiments, in a case that the information elements container is a type 6 IEs container, the information element identifier of the type 6 IEs container may use an IEI of the "comprehension required" of an existing type 6 IE, for example, any one of IEI 7C to 7F, so as to meet a transmission requirement without breaking the relevant technical protocol architecture.

In some other embodiments, in a case that the information elements container is a type 6 IEs container, the information element identifier of the type 6 IEs container may be set to an available IEI of non-"comprehension requirement", for example, the IEI is any one of 70, 71, or 7B, and then IEs of the remaining two IEI identifiers and a newly defined type 6 IE are all encapsulated in the type 6 IEs container.

The information transmission method provided in this embodiment of this application may be executed by an information transmission apparatus. In the embodiments of this application, the information transmission apparatus provided in the embodiments of this application is described by using an example in which the information transmission apparatus executes the information transmission method.

Referring to FIG. 8, FIG. 8 is a structural schematic diagram of an information transmission apparatus according to an embodiment of this application. The apparatus is applied to a first communication device. As shown in FIG. 8, the information transmission apparatus 80 includes:
a first sending module 81, configured to send a first message to a second communication device, where
the first message includes an information elements container, and the information elements container includes identification information of at least one first information element and content of the at least one first information element.

Optionally, the first sending module 81 is specifically configured to send the first message to the second communication device in a case that the first condition is met; and the first condition includes at least one of the following:
the first communication device determines that at least one information element needs to be provided for the second communication device;
the first communication device supports encoding and decoding of the information elements container;
the second communication device supports encoding and decoding of the information elements container; or
the identification information of the at least one first information element is encapsulated in the information elements container.

Optionally, in a case that the first communication device does not support the encoding and decoding of the information elements container, and/or the second communication device does not support the encoding and decoding of the information elements container, the first sending module 81 is further configured to: send a second message to the second communication device, where the second message includes an information element identifier of the at least one first information element and content of the at least one first information element, and the second message does not include the information elements container.

Optionally, the information transmission apparatus 80 further includes: a first receiving module, where the first receiving module is configured to perform at least one of the following:
receiving capability information from the second communication device, where the capability information is used for indicating whether the second communication device supports the encoding and decoding of the information elements container; or
receiving a first reason value from the second communication device, where the first reason value indicates a reason why the second communication device cannot identify the first message.

Optionally, in a case that the reason why the second communication device cannot identify the first message is: the second communication device does not support the encoding and decoding of the information elements container, the first sending module 81 is further configured to: send content of the at least one first information element to the second communication device by using a third message.

Optionally, the first message further includes: an information element identifier of at least one second information element and content of the at least one second information element.

Optionally, the information transmission apparatus 80 further includes:
a starting module, configured to start a first timer during sending of the first message to the second communication device, where the first timer is a timer for the second communication device to reply and confirm the first message; and
a first execution module, configured to resend the first message to the second communication device in a case that no fourth messages of the second communication device for replying and confirming the first message are received after the first timer expires; or, stop the first timer in a case that a fourth message of the second communication device for replying and confirming the first message is received before the first timer expires.

Optionally, the information elements container includes: content of the information elements container. The content of the information elements container includes: a number of first information elements in the information elements container, and information of each first information element in the information elements container. The information of each first information element includes: identification information of each first information element, a length of each first information element, and content of each first information element.

Optionally, the information elements container includes: an information element indicator list and content of the information elements container.

An information element indicator in the information element indicator list is used for indicating whether the information elements container includes a first information element corresponding to the information element indicator. The content of the information elements container includes: information of each first information element in the information elements container. The information of each first information element includes: identification information of each first information element, a length of each first information element, and content of each first information element.

Optionally, the information elements container further includes at least one of the following:
an information element identifier of the information elements container; or
a length of the information elements container.

The information transmission apparatus 80 provided in this embodiment of this application can implement each process implemented in the method embodiment shown in FIG. 2, and in addition, the same technical effect can be achieved. To avoid repetition, details are not described herein again.

Referring to FIG. 9, FIG. 9 is a structural schematic diagram of an information transmission apparatus according to an embodiment of this application. The apparatus is applied to a second communication device. As shown in FIG. 9, an information transmission apparatus 90 includes:
a second receiving module 91, configured to receive a first message from a first communication device, where
the first message includes an information elements container, and the information elements container includes identification information of at least one first information element and content of the at least one first information element.

Optionally, the second receiving module 91 is specifically configured to receive the first message from the first communication device in a case that a first condition is met; the first condition includes at least one of the following:
the first communication device determines that at least one information element needs to be provided for the second communication device;
the first communication device supports encoding and decoding of the information elements container;
the second communication device supports encoding and decoding of the information elements container; or
the identification information of the at least one first information element is encapsulated in the information elements container.

Optionally, the information transmission apparatus 90 further includes:
a second execution module, configured to decode the information elements container; or, ignore a related field of the information elements container during decoding of the first message.

Optionally, the information transmission apparatus 90 further includes:
a second sending module, configured to send a fourth message to the first communication device, where the fourth message is used for replying and confirming the first message.

Optionally, the second sending module is further configured to: after the related field of the information elements container is ignored, send first indication information to the first communication device, where the first indication information is used for indicating that the second communication device does not support the encoding and decoding of the information elements container, or for indicating that the decoding of the information elements container fails.

Optionally, in a case that the first communication device does not support the encoding and decoding of the information elements container, and/or the second communication device does not support the encoding and decoding of the information elements container, the second receiving module 91 is further configured to: receive a second message from the first communication device, where the second message includes an information element identifier of the at least one first information element and content of the at least one first information element, and the second message does not include the information elements container.

Optionally, the second sending module is further configured to perform at least one of the following:
sending capability information to the first communication device, where the capability information is used for indicating whether the second communication device supports the encoding and decoding of the information elements container; or
sending a first reason value to the first communication device, where the first reason value is used for indicating a reason why the second communication device cannot identify the first message.

Optionally, the information elements container includes: content of the information elements container. The content of the information elements container includes: a number of first information elements in the information elements container, and information of each first information element in the information elements container. The information of each first information element includes: identification information of each first information element, a length of each first information element, and content of each first information element.

Optionally, the information elements container includes: an information element indicator list and content of the information elements container. An information element indicator in the information element indicator list is used for indicating whether the information elements container includes a first information element corresponding to the information element indicator. The content of the information elements container includes: information of each first information element in the information elements container. The information of each first information element includes: identification information of each first information element, a length of each first information element, and content of each first information element.

Optionally, the information elements container further includes at least one of the following:
an information element identifier of the information elements container; or
a length of the information elements container.

The information transmission apparatus 90 provided in this embodiment of this application can implement each process implemented in the method embodiment shown in FIG. 7, and in addition, the same technical effect can be achieved. To avoid repetition, details are not described herein again.

Optionally, as shown in FIG. 10, an embodiment of this application further provides a communication device 100, including a processor 101 and a memory 102. The memory 102 stores a program or indication capable of running on the processor 101. For example, in a case that the communication device 100 is a first communication device, the program or indication, when executed by the processor 101, implements the steps of the information transmission method in the embodiments shown in FIG. 2. In addition, the same technical effect can be achieved. In a case that the communication device 100 is a second communication device, the program or the indication, when executed by the processor 101, implements the steps of the information transmission method in the embodiments shown in FIG. 7. In addition, the same technical effect can be achieved. To avoid repetition, details are not described herein again.

An embodiment of this application further provides a communication device, including a processor and a communication interface. For example, in a case that the communication device 100 is a first communication device, the communication interface is configured to send a first message to a second communication device; or in a case that the communication device 100 is a second communication device, the communication interface is configured to receive a first message from a first communication device. The embodiment corresponds to the method embodiment, the implementation processes and implementations of the foregoing method embodiments can be applied to this embodiment. In addition the same technical effect can be achieved. To avoid repetition, details are not described herein again.

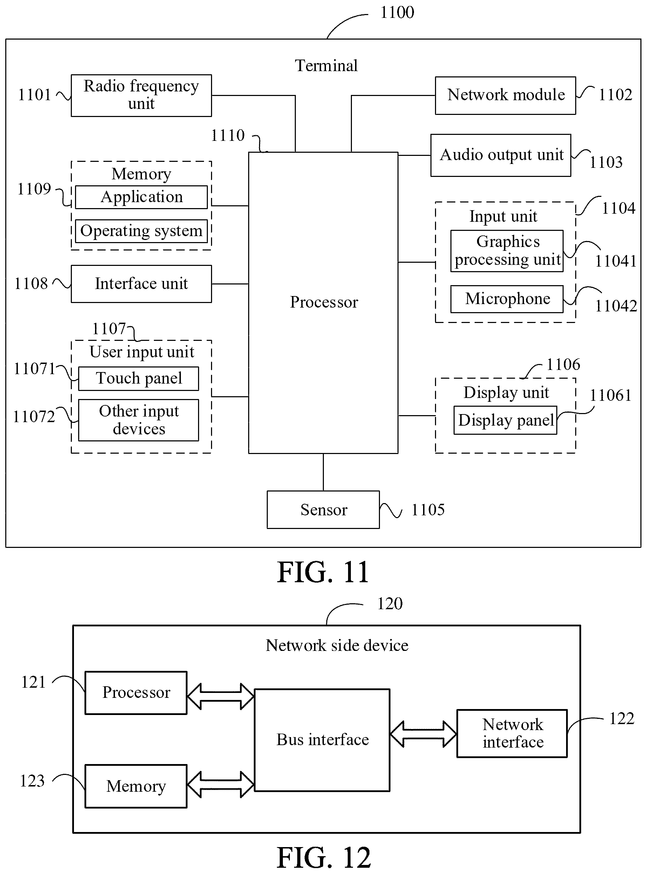

Specifically, FIG. 11 is a schematic diagram of a hardware structure of a terminal for implementing an embodiment of this application.

The terminal 1100 includes, but is not limited to: at least some components in a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

A person skilled in the art may understand that the terminal 1100 may further include a power supply (such as a battery) for supplying power to the components. The power supply may be logically connected to the processor 1110 by a power management system, thereby implementing functions such as charging, discharging, and power consumption management by using the power management system. The terminal structure shown in FIG. 11 does not constitute a limitation on the terminal, and the terminal may include more or fewer components than shown, or combine some components, or have different component arrangements, and details are not described herein again.

It should be understood that, in this embodiment of this application, the input unit 1104 may include a graphics processing unit (Graphics Processing Unit, GPU) 11041 and a microphone 11042. The graphics processor 11041 processes image data of a still picture or a video obtained by an image capture apparatus (such as a camera) in a video capture mode or an image capture mode. The display unit 1106 may include a display panel 11061, and the display panel 11061 may be configured in the form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The another input device 11072 may include, but is not limited to, a physical keyboard, a functional key (such as a volume control key or a switch key), a track ball, a mouse, and a joystick, and details are not described herein again.

In this embodiment of this application, after receiving downlink data from the network side device, the radio frequency unit 1101 may transmit the downlink data to the processor 1110 for processing. In addition, the radio frequency unit 1101 may transmit uplink data to the network side device. Generally, the radio frequency unit 1101 includes, but is not limited to, an antenna, an amplifier, a transceiver, a coupler, a low noise amplifier, a duplexer, or the like.

The memory 1109 may be configured to store software programs or indications and various pieces of data. The memory 1109 may mainly include a first storage area for storing programs or indications and a second storage area for storing data. The first storage area may store an operating system, application programs or indications required by at least one function (for example, a sound playback function and an image playback function), or the like. In addition, the memory 1109 includes a transitory memory or a non-transitory memory, or the memory 1109 may include both a transitory memory and a non-transitory memory; The non-transitory memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The transitory memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1109 in this embodiment of this application includes, but is not limited to, these and any other suitable types of memory.

The processor 1110 may include one or more processing units. Optionally, the processor 1110 integrates an application processor and a modem processor. The application processor mainly processes operations related to an operating system, a user interface, an application, or the like. The modem processor, for example, a baseband processor, mainly processes wireless communication signals. It can be understood that the modem processor may not be integrated into the processor 1110.

The radio frequency unit 1101 is configured to send a first message to a network side device; or, the radio frequency unit 1101 is configured to receive a first message from a network side device, where the first message includes an information elements container, and the information elements container includes identification information and content of at least one first information element.

The terminal 1100 provided in this embodiment of this application can implement the processes implemented in the method embodiment in FIG. 2 or FIG. 7. In addition, the same technical effect can be achieved. To avoid repetition, details are not described herein again.

Specifically, an embodiment of this application further provides a network side device. As shown in FIG. 12, the network side device 120 includes: a processor 121, a network interface 122, and a memory 123. The network interface 122 is, for example, a common public radio interface (common public radio interface, CPRI).

Specifically, the network side device 120 of this embodiment of the present invention further includes: an indication or a program stored on the memory 123 and capable of being run on the processor 121, where the processor 121 invokes the indication or the program in the memory 123 to perform the method performed by the modules shown in FIG. 8 or FIG. 9. In addition, the same technical effect is achieved. To avoid repetition, details are not described herein again.

An embodiment of this application further provides a readable storage medium. The readable storage medium stores a program or indications. The program or indications, when executed by a processor, cause the processor to perform the processes of the foregoing information transmission method embodiment. In addition, the same technical effect can be achieved. To avoid repetition, details are not described herein again.

The processor is the processor in the terminal described in the foregoing embodiment. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to run a program or indications to implement the processes of the foregoing information transmission method embodiments. In addition, the same technical effect can be achieved. To avoid repetition, details are not described herein again.

It should be understood that the chip mentioned in this embodiment of this application may alternatively be referred to as a system-grade chip, a system chip, a chip system, or a system-on-chip.

An embodiment of this application further provides a computer program/program product. The computer program/program product is stored in a storage medium. The computer program/program product is executed by at least one processor to implement the processes of the foregoing information transmission method in the embodiments. In addition, the same technical effect can be achieved. To avoid repetition, details are not described herein again.

An embodiment of this application further provides a communication system, including: a terminal and a network side device, where the terminal is capable of being configured to perform the steps of the method shown in FIG. 2, and the network side device is capable of being configured to perform the steps of the method shown in FIG. 7; or, the terminal is capable of being configured to perform the steps of the method shown in FIG. 7, and the network side device is capable of being configured to perform the steps of the method shown in FIG. 2.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be pointed out that the scope of the methods and apparatuses in the embodiments of this application is not limited to performing functions in the order shown or discussed, and may further include performing functions in a substantially simultaneous manner or in a reverse order based on the functions involved, for example, the described methods may be performed in an order different from the order described, and various steps may be added, omitted, or combined. In addition, the features described with reference to some examples can be combined in other examples.

According to the descriptions in the foregoing implementations, a person skilled in the art may clearly learn that the method according to the foregoing embodiment may be implemented by relying on software and a commodity hardware platform or by using hardware. Based on such an understanding, the technical solutions of this application essentially or the part contributing to the prior art may be implemented in a form of a software product. The computer software product is stored in a storage medium (such as a ROM/RAM, a magnetic disk, or an optical disc) and includes several indications for instructing a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. An information transmission method, comprising:
sending, by a first communication device, a first message to a second communication device, wherein
the first message comprises an information elements container, and the information elements container comprises identification information of at least one first information element and content of the at least one first information element.

2. The method according to claim 1, wherein the sending a first message to a second communication device comprises:
in a case that a first condition is met, sending, by the first communication device, the first message to the second communication device; and
the first condition comprises at least one of the following:
the first communication device determines that at least one information element needs to be provided for the second communication device;
the first communication device supports encoding and decoding of the information elements container;
the second communication device supports encoding and decoding of the information elements container; or
the identification information of the at least one first information element is encapsulated in the information elements container.

3. The method according to claim 1 or 2, wherein in a case that the first communication device does not support encoding and decoding of the information elements container, and/or the second communication device does not support the encoding and decoding of the information elements container, the method further comprises:
sending, by the first communication device, a second message to the second communication device, wherein
the second message comprises an information element identifier of the at least one first information element and content of the at least one first information element, and the second message does not comprise the information elements container.

4. The method according to claim 1 or 2, wherein the method further comprises at least one of the following:
receiving, by the first communication device, capability information from the second communication device, wherein the capability information is used for indicating whether the second communication device supports encoding and decoding of the information elements container; or
receiving, by the first communication device, a first reason value from the second communication device, wherein the first reason value indicates a reason why the second communication device cannot identify the first message.

5. The method according to claim 4, wherein in a case that the reason why the second communication device cannot identify the first message is: the second communication device does not support the encoding and decoding of the information elements container, the method further comprises:
sending, by the first communication device, content of the at least one first information element to the second communication device by using a third message.

6. The method according to any one of claims 1 to 3, wherein the first message further comprises: an information element identifier of at least one second information element and content of the at least one second information element.

7. The method according to any one of claims 1 to 6, wherein during sending of the first message to the second communication device, the method further comprises:
starting, by the first communication device, a first timer, wherein the first timer is a timer for the second communication device to reply and confirm the first message; and
in a case that no fourth messages of the second communication device and used for replying and confirming the first message are received after the first timer expires, resending, by the first communication device, the first message to the second communication device; or, in a case that a fourth message of the second communication device and used for replying and confirming the first message is received before the first timer expires, stopping, by the first communication device, the first timer.

8. The method according to claim 1, wherein the information elements container comprises: content of the information elements container; the content of the information elements container comprises: a number of first information elements in the information elements container, and information of each first information element in the information elements container; and
the information of each first information element comprises: identification information of each first information element, a length of each first information element, and content of each first information element.

9. The method according to claim 1, wherein the information elements container comprises: an information element indicator list and content of the information elements container, wherein
an information element indicator in the information element indicator list is used for indicating whether the information elements container comprises a first information element corresponding to the information element indicator;
the content of the information elements container comprises: information of each first information element in the information elements container; and
the information of each first information element comprises: identification information of each first information element, a length of each first information element, and content of each first information element.

10. The method according to any one of claims 1 to 9, wherein the information elements container further comprises at least one of the following:
an information element identifier of the information elements container; or
a length of the information elements container.

11. An information transmission method, comprising:
receiving, by a second communication device, a first message from a first communication device, wherein
the first message comprises an information elements container, and the information elements container comprises identification information of at least one first information element and content of the at least one first information element.

12. The method according to claim 11, wherein the receiving a first message from a first communication device comprises:
in a case that a first condition is met, receiving, by the second communication device, the first message from the first communication device, wherein
the first condition comprises at least one of the following:
the first communication device determines that at least one information element needs to be provided for the second communication device;
the first communication device supports encoding and decoding of the information elements container;
the second communication device supports encoding and decoding of the information elements container; or
the identification information of the at least one first information element is encapsulated in the information elements container.

13. The method according to claim 11 or 12, wherein after receiving the first message from the first communication device, the method further comprises any one of the following:
decoding, by the second communication device, the information elements container; or
ignoring, by the second communication device, a related field of the information elements container during decoding of the first message.

14. The method according to claim 13, wherein after the information elements container is decoded, the method further comprises:
sending, by the second communication device, a fourth message to the first communication device, wherein the fourth message is used for replying and confirming the first message.

15. The method according to claim 13, wherein after ignoring the related field of the information elements container, the method further comprises:
sending, by the second communication device, first indication information to the first communication device, wherein the first indication information is used for indicating that the second communication device does not support encoding and decoding of the information elements container, or for indicating that decoding of the information elements container fails.

16. The method according to any one of claims 11 to 15, wherein in a case that the first communication device does not support encoding and decoding of the information elements container, and/or the second communication device does not support the encoding and decoding of the information elements container, the method further comprises:
receiving, by the second communication device, a second message from the first communication device, wherein
the second message comprises an information element identifier of the at least one first information element and content of the at least one first information element, and the second message does not comprise the information elements container.

17. The method according to any one of claims 10 to 14, wherein the method further comprises at least one of the following:
sending, by the second communication device, capability information to the first communication device, wherein the capability information is used for indicating whether the second communication device supports encoding and decoding of the information elements container; or
sending, by the second communication device, a first reason value to the first communication device, wherein the first reason value is used for indicating a reason why the second communication device cannot identify the first message.

18. The method according to claim 11, wherein the information elements container comprises: content of the information elements container; the content of the information elements container comprises: a number of first information elements in the information elements container, and information of each first information element in the information elements container; and
the information of each first information element comprises: identification information of each first information element, a length of each first information element, and content of each first information element.

19. The method according to claim 11, wherein the information elements container comprises: an information element indicator list and content of the information elements container, wherein
an information element indicator in the information element indicator list is used for indicating whether the information elements container comprises a first information element corresponding to the information element indicator;
the content of the information elements container comprises: information of each first information element in the information elements container; and
the information of each first information element comprises: identification information of each first information element, a length of each first information element, and content of each first information element.

20. The method according to any one of claims 11 to 19, wherein the information elements container further comprises at least one of the following:
an information element identifier of the information elements container; or
a length of the information elements container.

21. An information transmission apparatus, comprising:
a first sending module, configured to send a first message to a second communication device, wherein
the first message comprises an information elements container, and the information elements container comprises identification information of at least one first information element and content of the at least one first information element.

22. An information transmission apparatus, comprising:
a second receiving module, configured to receive a first message from a first communication device, wherein
the first message comprises an information elements container, and the information elements container comprises identification information of at least one first information element and content of the at least one first information element.

23. A terminal, comprising a processor and a memory, wherein the memory stores a program or an indication capable of being run on the processor, and the program or the indication, when executed by the processor, implements the steps of the information transmission method according to any one of claims 1 to 10, or the steps of the information transmission method according to any one of claims 11 to 20.

24. A network side device, comprising a processor and a memory, wherein the memory stores a program or an indication capable of being run on the processor, and the program or the indication, when executed by the processor, implements the steps of the information transmission method according to any one of claims 1 to 10, or the steps of the information transmission method according to any one of claims 11 to 20.

25. A readable storage medium, wherein the readable storage medium stores a program or indication, and the program or indication, when executed by a processor, implements the steps of the information transmission method according to any one of claims 1 to 10, or the steps of the information transmission method according to any one of claims 11 to 20.
